# EUROPEAN PATENT SPECIFICATION

(11) **EP 3 430 177 B1**
(45) Date of publication and mention of the grant of the patent: **25.11.2020**
(21) Application number: 17713880.7
(22) Date of filing: 09.03.2017
(51) Int. Cl.: C22B 3/42, C22B 60/02

(54) **METHOD FOR ISOLATION OF AC FROM MIXTURE OF RADIUM, ACTINIUM AND THORIUM**
VERFAHREN ZUR ISOLIERUNG VON AC AUS EINEM GEMISCH VON RADIUM, ACTINIUM UND THORIUM
PROCÉDÉ D'ISOLEMENT DE AC À PARTIR D'UN MÉLANGE DE RADIUM, D'ACTINIUM ET DE THORIUM

(30) Priority: 16.03.2016 CZ 20160151
(43) Date of publication of application: 23.01.2019
(73) Proprietor: Ceské vysoké ucení technické v Praze, 160 00 Praha 6 - Dejvice (CZ); UJV Rez, A.S., 25068 Husinec-Rez (CZ); Univerzita Karlova, Prirodovedecka Fakulta, 11636 Praha 1 (CZ)
(72) Inventor: KOZEMPEL, Jan, 68801 Uhersky Brod (CZ); VLK, Martin, 90846 Unin (SK); MICOLOVA, Petra, 54233 Rtyne v Podkrkonosi (CZ); KUKLEVA, Ekaterina, 36001 Karlovy Vary (CZ); FIALOVA, Katerina, 33601 Blovice (CZ); KOMANKOVA, Lucie, 16400 Praha 6 - Nebusice (CZ); BAJZIKOVA, Anna, 46312 Liberec (CZ); PODLAHA, Josef, 25067 Klecany (CZ); SVOBODA, Karel, 27201 Kladno (CZ); BURIAN, Patrick, 27743 Chlumin (CZ); HOFFMANN, Michal, 25263 Roztoky u Prahy (CZ); SMRCEK, Stanislav, 14200 Praha 4 - Krc (CZ)
(74) Representative: Hartvichova, Katerina
(86) International application number: PCT/CZ2017/050012
(87) International publication number: WO 2017/157355

(56) References cited:
- GB-A- 1 206 712
- US-A- 5 809 394
- US-A1- 2015 292 061

## Description

### Field of Art

The present invention relates to a method of preparation of ²²⁷Ac and its daughter decay products, and the recycling of target ²²⁶Ra that allows to increase the yield of ²²⁷Ac.

### Background Art

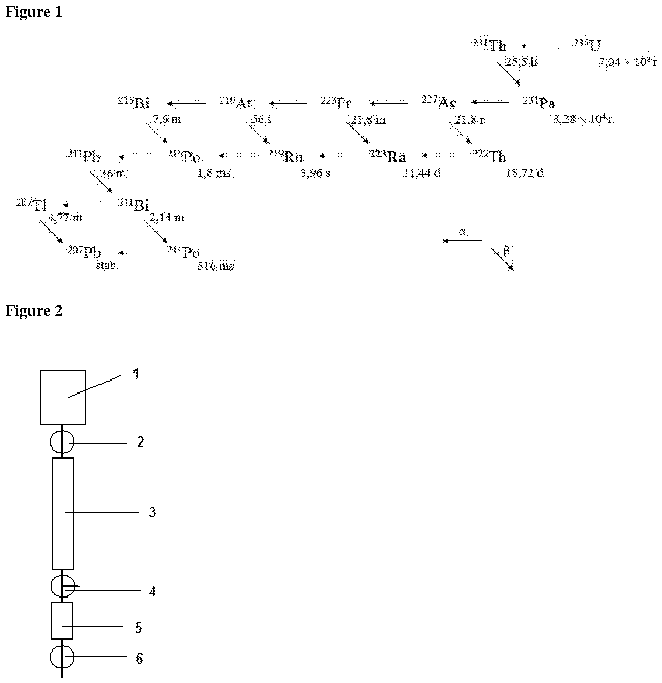

Actinium-227 is produced by irradiation of ²²⁶Ra in a nuclear reactor by thermal neutrons. Firstly, the ²²⁷Ra (42 min) is formed, which subsequently decays to ²²⁷Ac (21,8 years), which in turn reaches a radioactive equilibrium with daughter ²²⁷Th (18,6 days) that through one alpha decay decays to ²²³Ra (11,4 days) and its daughter nuclei. As a by-product of a parasitic neutron capture, ²²⁸Ac (6,1 hours) is formed and decays to ²²⁸Th (1,9 years), which is in an equilibrium with ²²⁴Ra (3.6 days). Actinium-227 is also a member of the natural ²³⁵U decay chain. This decay chain is depicted in figure 1. Several methods are known for obtaining ²²⁷Ac from such mixtures ; based on co-precipitation from homogeneous solutions in the form of less-soluble salts Ac(Ox)₃ or co-precipitation with PbSO₄ (Anal Chem 28, 11, 1780-1782, 1956 and Report MLM-967, 1954).

A complementary method for actinium preparation is the precipitation of RaCO₃, wherein the actinium is concentrated in the mother solution (Baetslé, L. H. and Droissart, A. (1973) Production and Applications of 227Ac. Report BLG-483).

However, these methods are not optimal in terms of quantity of the obtained actinium and number of performed separation steps, and are convenient only for big amounts of radionuclides.

Methods of obtaining carrier-free actinium by ion-exchange column chromatography using the anion exchanger MP1 in nitrate and chloride cycle were also described (Applied Radiation and Isotopes 62, 667-679, 2005). Other publications describe the use of anion exchanger based on styrene cross-linked with divinylbenzene in nitrate cycle (e. g. Dowex 50 or Dowex 1), wherein solutions of strong acids were used as eluents (Radiochim Acta 9, 4, 181-186, 1968). Alternatively, a combination of cation exchanger and titanium phosphate TiP in 1N HNO₃ was used (J Radioanal Chem 35, 185-196, 1977). Other methods of obtaining actinium are based in particular on extraction chromatography and the use of extraction agents. During the separation by extraction chromatography using a stationary phase impregnated by extraction agent, the extraction agent can be washed out from the sorption bed of the column which leads both to the degradation of the sorption efficiency and to the degradation of chemical purity of the eluate. Separation methods based on the separation by ion exchangers, in particular ion exchangers based on styrene cross-linked with divinylbenzene (e. g. Dowex 50 or Dowex 1) suffer from problems with the undesirable elution of thorium and actinium during the long-term use or with the loss of these radionuclides. (J Radioanal Nucl Chem, 260, 167-172, 2004 and J Radioanal Nucl Chem, 285, 667-673, 2010).

US 5,809,394 discloses a method of obtaining ²²³Ra from a Ra/Ac/Th solution, containing the steps of loading a mixture Ra/Ac/Th onto a separation column containing dowex in nitrate cycle, elution by 0.35M nitric acid, leading the eluate through a second column, elution by 0.35M nitric acid, and isolating eluent containing ²²³Ra.

### Disclosure of the Invention

The present invention provides a method for isolation of Ac, e.g. the nuclide ²²⁷Ac, from a mixture comprising radium, actinium and thorium (e.g. ²²⁶Ra/²²³Ra/²²⁷Ac/²²⁷Th/²²⁸Th/²²⁹Th). One advantage of this method is that ²²⁶Ra is separated and can be recycled for repeated irradiation.

The method according to the invention includes the following steps:
a) a mixture comprising Ra/Ac/Th (e.g. ²²⁶Ra/²²⁷Ac/Th) is loaded onto a separation column containing an anion exchanger based on styrene cross-linked with divinylbenzene, wherein the content of the cross-linking agent is in the range of 5 to 50 %, preferably 8 to 16 % (e.g. Dowex 1×8 - a strong anion exchanger cross-linked with 8 and more % of divinylbenzene), in nitrate cycle, and eluted with an elution solution containing a mixture of 0.6 - 0.8M aqueous solution of nitric acid and methanol in volume ratio of nitric acid solution : methanol = 30 : 70 to 10 : 90,
b) the eluate from the separation column is lead through a purification column containing an anion exchanger based on styrene cross-linked with divinylbenzene, wherein the content of the cross-linking agent is in the range of 5 to 50 %, preferably 8 to 16 % (e.g. Dowex 1×8 - a strong anion exchanger cross-linked with 8 and more % of divinylbenzene), in nitrate cycle, and eluted with a solution containing a mixture of 0.6 - 0.8M aqueous solution of nitric acid and methanol in volume ratio of nitric acid solution : methanol = 30 : 70 to 10 : 90,
c) the eluate from step b), containing ²²⁶Ra, is isolated, preferably for recycling for a repeated irradiation,
d) Ac and/or Th is washed out from the separation and purification column using an elution solution containing 5 to 10M mineral acid and optionally at least one complexing agent, preferably the mineral acid is HNO₃ and/or HCl.

The elution in step d) is usually performed by collecting individual fractions wherein the front fractions typically contain actinium, middle fractions typically contain a mixture of actinium and thorium, and the back fractions typically contain thorium. Complete separation of Ac a Th can be achieved. The fractions containing isolated actinium can be used as desired, e.g. as the source of ²²³Ra. The fraction containing isolated thorium can also be used as desired.

The fractions containing Ac may additionally contain small amount of Ra formed by decay of Ac or Th. The residues of Ra can be removed from the solution of Ac by known methods (e.g. by its sorption on MnO₂ at pH 4-8, while the Ac is subsequently eluted with 0,2M HNO₃.).

Actinium can be isolated from the whole eluate from step d) or (if fractions were collected) from the fractions containing a mixture of actinium and thorium in further steps of the method, in which the mixture is loaded onto the separation column containing a polymeric matrix containing a complexing agent, and the elution is performed with 0.1 - 10M mineral acid, preferably the mineral acid is HNO₃ and/or HCl. Preferably, the complexing agent is covalently bound on the polymeric matrix, this has the advantage that the complexing agent is not washed out from the column during elution or during long-term use of the column. A polymer with amine or nitrile functional groups, the polymer being in the form of beads, fibres or fabrics, can be used as the polymeric matrix for the covalently bound complexing agent.

The complexing agent is selected from a group comprising:
polyaminocarboxylic acids of general formula (I) 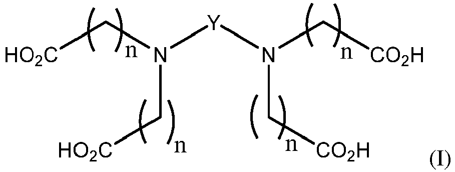
wherein n can be 1-5, Y can be selected from the group containing C1-C10 alkane-1,1-diyl, C2-C10 alkane-1,2-diyl, C3-C10 alkane-1,3-diyl, C2-C10 alkene-1,1-diyl, C2-C10 alkene-1,2-diyl, C3-C10 alkene-1,3-diyl, C2-C10 alkyne-1,1-diyl, C2-C10 alkyne-1,2-diyl, C3-C10 alkyne-1,3-diyl, C3-C10 cycloalk-1,1-diyl, C3-C10 cycloalk-1,2-diyl, C3-C10 cycloalk-1,3-diyl, C6-C10 ar-1,2-diyl, C6-C10 ar-1,3-diyl, C3-C10 heteroar-1,2-diyl containing at least one heteroatom, C3-C10 heteroar-1,3-diyl containing at least one heteroatom, C3-C10 heterocycl-1,2-diyl containing at least one heteroatom, C3-C10 heterocycl-1,3-diyl containing at least one heteroatom, wherein the heteroatoms are selected from the group containing O, S, N, P; and/or salts of polyaminocarboxylic acids with s Na⁺, K⁺, Mn²⁺, Ca²⁺, Zn²⁺, Fe³⁺, Cu²⁺;
polyphosphonic acids of a general formula (II) 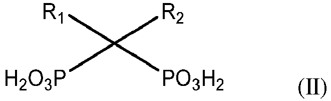
wherein R1, R2 can be the same or different, and are selected from the group containing hydrogen, C1-C10 alkyl, C6-C10 aryl, C1-C10 heteroalkyl containing at least one heteroatom, C3-C10 heteroaryl containing at least one heteroatom, C3-C10 heterocyclyl containing at least one heteroatom, wherein the heteroatoms are selected from the group containing O, S, N, P, hydroxyl, nitrile, amine, halogen (F, Cl, Br, I);
polyphosphonic acids of general formula (III) 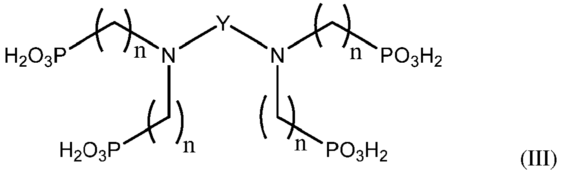
wherein n is 1-5, Y is selected from the group containing C1-C10 alkane-1,1-diyl, C2-C10 alkane-1,2-diyl, C3-C10 alkane-1,3-diyl, C2-C10 alkene-1,1-diyl, C2-C10 alkene-1,2-diyl, C3-C10 alkene-1,3-diyl, C2-C10 alkyne-1,1-diyl, C2-C10 alkyne-1,2-diyl, C3-C10 alkyne-1,3-diyl, C3-C10 cycloalk-1,1-diyl, C3-C10 cycloalk-1,2-diyl, C3-C10 cycloalk-1,3-diyl, C6-C10 ar-1,2-diyl, C6-C10 ar-1,3-diyl, C3-C10 heteroar-1,2-diyl containing at least one heteroatom, C3-C10 heteroar-1,3-diyl containing at least one heteroatom, C3-C10 heterocycl-1,2-diyl containing at least one heteroatom, C3-C10 heterocycl-1,3-diyl containing at least one heteroatom, wherein the heteroatoms are selected from the group containing O, S, N, P;
esters of phosphonic acid with C1-C10 alkyl, C6-C10 aryl, C1-C10 heteroalkyl containing at least one heteroatom, C3-C10 heteroaryl containing at least one heteroatom, C3-C10 heterocyclyl containing at least one heteroatom, wherein the heteroatoms are selected from the group containing O, S, N, P, hydroxyl, nitrile, amine, halogen (F, Cl, Br, I);preferably bis-(2-ethyl-hexyl)-phosphonic acid (HDEHP); amino tris(methylenephosphonic) acid (ATMP) and its esters with C1-C10 alkyl, C6-C10 aryl, C1-C10 heteroalkyl containing at least one heteroatom, C3-C10 heteroaryl containing at least one heteroatom, C3-C10 heterocyclyl containing at least one heteroatom, wherein the heteroatoms are selected from the group containing O, S, N, P, hydroxyl, nitrile, amino, halogen (F, Cl, Br, I);
diglycolamides of general formula (IV) 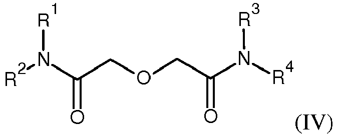
wherein R1, R2, R3 can be the same or different, and are selected from the group containing hydrogen, C1-C10 alkyl, C6-C10 aryl, C3-C10 heteroaryl containing at least one heteroatom, C3-C10 heterocyclyl containing at least one heteroatom, wherein the heteroatoms are selected from the group containing O, S, N, P; R4 represents the residue of the polymeric matrix or has the same meaning as R1 to R3. A preferred diglycolylamide is *N,N,N',N'*-tetraoctyldiglycolylamide (TODGA);
quaternary ammonium salts (V) 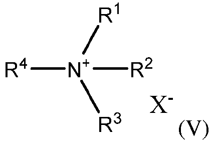
wherein R1, R2, R3, R4 can be the same or different, and are selected from the group containing hydrogen, C1-C10 alkyl, C6-C10 aryl, C3-C10 heteroaryl containing at least one heteroatom, C3-C10 heterocyclyl containing at least one heteroatom, wherein the heteroatoms are selected from the group containing O, S, N, P; X can be Cl⁻, Br⁻ or I⁻; preferably *N*-Methyl-*N,N,N*-trioctylammonium chloride (Aliquat® 336);
nitrilotriacetic acid or its derivatives, such as *N,N,N',N',N",N"*-hexaoctylnitrilotriacetamide.

Preferably, dicarbolides, thenoyltrifluoacetone (TTA) or nitrilotriacetic acid (NTA) or phenylacetic acid (PAA) can be used.

The method for the separation of Ac and Th mixture can be performed on two serial columns, while one of them contains the polymeric matrix with covalently bound complexing agent and one of them contains the anion exchanger.

In this way an easy and reliable Ac and Th separation after previous Ra removal can be reached.

The steps a) and b) are preferably performed using the apparatus according to the utility model application No.: CZ PUV 2015-31943.

The presence of both the separation column and the purification column in steps a) and b) is important for reliable removal of radium from the mixture of actinium and thorium. In particular, when the separation column with the sorbent is used for a long time, actinium and thorium may leak, due to the radiolysis, recoils of daughter nuclei and traces of chemical impurities. The secondary separation at purification column eliminates this problem even when both columns are used for a long time.

### Brief description of the drawings

Figure 1: ²³⁵U decay chain.
Figure 2: A schematic representation of the setup of the columns for the separation of Ac, Th, Ra (1 - elution solution storage vessel, 3 - separation column, 5 - purification column, 2, 4, 6 - valves).

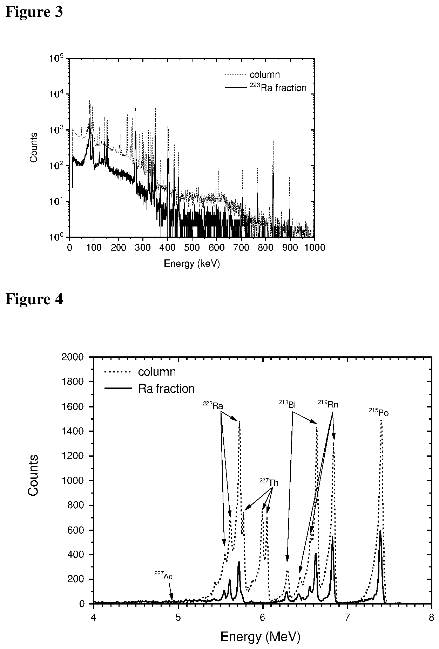

Figure 3: Comparison of gamma spectra of pure ²²³Ra fraction and a mixture of ²²⁷Ac and ²²⁷Th trapped on a separation column.
Figure 4: Comparison of alpha spectra of pure ²²³Ra fraction and a mixture of ²²⁷Ac and ²²⁷Th trapped on a separation column.

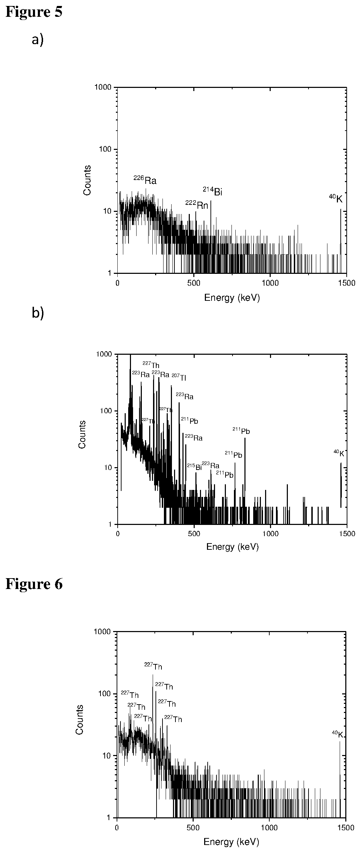

Figure 5: a) Gamma spectrum of ²²⁷Ac fraction measured immediately after separation - at the natural background level (poorly detectable), b) Spectrum of the same ²²⁷Ac after the radioactive equilibrium ²²⁷Ac/²²⁷Th/²²³Ra/²¹¹Pb was reached, measured 1 year after separation.
Figure 6: Gamma spectrum of pure ²²⁷Th fraction measured immediately after separation.

### Examples

### Analytical methods:

Activities of eluted fractions were measured using NaI(Tl) scintillation well-type detector (CII CRC-55tW, Capintec®). Fractions were always collected with a certain volume (as specified in each example) into PE scintillation vials. Gamma spectra of single fractions were measured on a coaxial HPGe detector (Princeton Gamma Technologies) using multichannel analyser (Ortec 919 Spectrum Master) and HV supply (Canberra 2100), built-in preamplifier and spectroscopy amplifier (Ortec 672) in the range of photon energies 0-2000 keV. Samples were neither treated nor modified before the measurement. Alpha particle spectra were collected on an alpha-spectrometric system (Ortec, Octete). Samples for the measurement were prepared by evaporating of a solution aliquot (10 µL) onto metallic support.

Determination of ²²⁷Ac was performed indirectly (due to the low intensity of the emitted radiations) - its activity was determined by the measurement of daughter nuclides ²²⁷Th, ²²³Ra and ²¹¹Pb in time period of at least 1 month after the separation.

For the examples described below, a model mixture of ²²⁷Ac/²²⁷Th/²²³Ra was selected, having the same chemical properties as ²²⁶Ra/²²⁷Ac/^{227Th} mixture.

### Example 1: Separation of ²²³Ra from Ac/Th

The separation column 3 is prepared. 5 g of Dowex 1×8, 100-200 mesh in Cl⁻ cycle is left to swell in 0.1M HNO₃, further the resin is transferred into nitrate cycle in the mixture of 0.7M HNO₃ and 80% methanol. The sorbent is poured into an empty plastic or glass column equipped with a frit with the bed volume of approx. 2.5 mL. The column is washed with approx. 30 mL of the same mixture that finalizes the separation column 3 preparation. The setup of the experiment is such that the eluate from the separation column 3 enters through the loading and/or degassing valve 4 onto purification column 5 and the eluate is collected into prepared vials. Stock solution of Ac, Th, Ra is transferred into 0.7M HNO₃ in 80% methanol solution and this solution is applied onto the separation column 3 until fully soaked, while 0.5-1 mL fractions are collected. Elution with 0.7 M HNO₃ in 80% methanol is performed using gravitation force at laboratory temperature, advantageously peristaltic pump may be employed. Overall losses of Ra during first separation step on the separation column 3 and the purification column 5 does not exceed 5 %. The mixture of Ac/Th trapped on the columns is washed-out from the ion exchanger with 8M HNO₃.

### Example 2: Purification of Ac from Th

The column is prepared as described. 2 g of Dowex 1×8, 100-200 mesh in Cl⁻ cycle is left to swell in 0.1M HNO₃. Further the resin is transferred into nitrate cycle in the mixture of 1M HNO₃ to 8M HNO₃. Part of sorbent is loaded onto empty plastic column with bed volume of approx. 0.5 mL and the column is washed with approx. 30 mL of the same mixture that finalizes the preparation of the column. The setup of the separation is that, the eluate flows through the column and the fractions are collected. Evaporated eluate (mixture of Ac/Th eluted with 8M HNO₃) from the example 1 is reconstituted in 0.5 ml 8M HNO₃ and loaded onto the column until fully soaked, while the eluate flows through the column and the fractions of 0.5-1 mL are collected. Elution is performed using gravitation force at laboratory temperature, advantageously the peristaltic pump may be employed. Firstly the Ac is eluted from the separation and purification column, with small amounts of Ra; Th is eluted with 0,5M HNO₃. The residue of Ra can be removed from the solution of Ac e.g. by its sorption on MnO₂ at pH 4-8, while the Ac is subsequently eluted with 0.2M HNO₃.

This example is a model case and similarly, it is possible to separate the mixture of Ac and Th trapped on the columns according to the example 1 by changing the elution solution to 8M HNO₃ and 0.5M HNO₃ after Ra washout.

### Example 3: Purification of Ac from Th

1 g of sorbent based on a polymeric matrix with covalently bound complexing agent (TODGA derivative) is left to swell in 0.1M HCl. Sorbent is then transferred into empty plastic column with bed volume of approx. 1.5 mL and the prepared column is washed with approx. 30 mL of 1M HCl. The arrangement of the separation is that, the eluate flows through the column and the fractions are collected. Eluted fractions with Ac and Th after the separation of Ra (evaporated eluate from example 1) are reconstituted in 1 mL of 1M HCl and loaded onto column till soaked completely, while fractions of 0.5-1.5 ml are collected. Elution is further performed with the solution of 1M to 10M mineral acids, like HNO₃ or HCl, employing gravitation force at laboratory temperature, advantageously the peristaltic pump is employed. Firstly Ac is eluted from the column and subsequently with longer retention time Th.

### Example 4: Purification of Ac from Th, using various complexing agents

### A) Complexing agent of formula I:

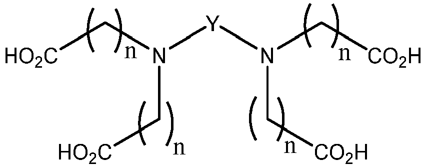

Mixture of Ac and Th in the solution of HNO₃ (pH = 2) is loaded onto a glass column filled with ion exchanger Dowex-50x8 (bed volume 3.5 mL) and after soaking the column is eluted by the mixture of 0.25 M solution of EDTA in HNO₃ (pH = 2). The fractions of the volume 0.5 mL are collected. In the front fractions, Ac is the first to be eluted, and then Th is eluted by 4M HCl.

### B) Complexing agent of formula II:

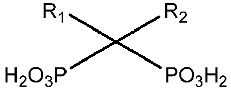

Mixture of Ac and Th is transferred to concentrated HCl and loaded onto a column filled with the sorbent on the base of polyacrylonitrile in the form of beads with average of 0.1 - 0.6 mm impregnated with 25% bis-(2-ethylhexyl)-methan-di-phosphonic acid used as the extraction agent. The volume of the column corresponds with the bed volume of the sorbent (2.5 mL). The separation is performed by the elution with 5M HCl and the fractions of the volume of 1 mL are collected. Firstly, Ac is eluted, followed by Th. The separation factor reaches up to 10³ under set conditions.

### C) Complexing agent of formula III:

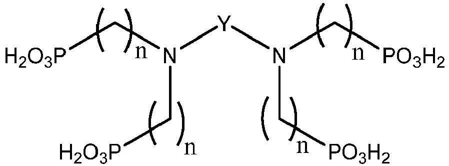

Mixture of Ac and Th in the solution of 2 M HNO₃ in 85% methanol is loaded onto a column formed by a bed of 5 mL of the sorbent of polyacrylonitrile beads with average of 0.1 - 0.6 mm with the content of 30 wt. % of diethylamine penta(methylenphosphonic acid). After soaking the elution with 2M HNO₃ in 85% methanol follows. Fractions of 1 mL are collected. Under these conditions, at least a partial separation of Ac and Th is reached when at least a part of Th remains sorbed on the column.

### D) Complexing agent of formula V:

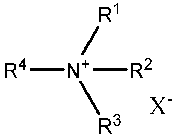

Mixture of Ac and Th in the solution of 0.1M HNO₃ is loaded onto the glass column of bed volume of approx. 3 mL filled with the sorbent of polyacrylonitrile beads with average of 0.1 - 0.6 mm impregnated with 30 wt % of *N*-methyl-*N,N,N*-trioctylammonium chloride (Aliquat 336). The elution is performed with 3M HNO₃. The fractions of 1 mL are collected and Ac is eluted in the front fractions, followed by Th. The difference in mass distribution coefficients is from 2 to 3 orders under these conditions.

### E) Complexing agent N,N,N',N',N",N"-hexaoctylnitrilotriacetamide:

Mixture of Ac and Th in the solution of 0.1M HNO₃ is loaded onto the column of bed volume of 3.5 mL filled with the matrix of polyacrylonitrile beads with average of 0.1 - 0.6 mm impregnated with 30 wt % *N,N,N',N',N",N"-*hexaoctylnitrilotriacetamide*.* The elution is performed with 0.15M HNO₃ and the fractions of 0.5 mL are collected. Mass distribution coefficients of Ac and Th are 0.1 and 50, respectively, using 0.15M HNO₃. That allows their separation. The effective separation can be reached with concentrations of acid from 0.1 to 10 M.

### Industrial applicability

The method for the preparation and separation of ²²⁷Ac from the irradiated targets of ²²⁶Ra provides actinium in radiochemical and radionuclide purity suitable for the use of ²²⁷Ac both in radionuclide generators of ²²³Ra for nuclear medicine and for industrial applications like e.g. in the production of Ac-Be neutron sources and radionuclide batteries for the use in space technologies or military applications.

## Claims

1. A method for isolation of Ac from a mixture comprising radium, actinium and thorium comprising the following steps:
a) a mixture of Ra/Ac/Th is loaded onto a separation column containing an anion exchanger based on a styrene cross-linked with divinylbenzene, wherein the content of the cross-linking agent is in the range of 5 to 50 %, preferably 8 to 16 %, in nitrate cycle, and eluted with a solution containing a mixture of 0.6 - 0.8M aqueous solution of nitric acid and methanol in volume ratio of nitric acid solution : methanol = 30 : 70 to 10 : 90,
b) the eluate from the separation column is lead through the purification column containing an anion exchanger based on styrene cross-linked with divinylbenzene, wherein the content of the cross-linking agent is in the range of 5 to 50 %, preferably 8 to 16 %, in nitrate cycle, and eluted with a solution containing a mixture of 0.6 - 0.8M aqueous solution of nitric acid and methanol in volume ratio of nitric acid solution : methanol = 30 : 70 to 10 : 90,
c) the eluate from step b), containing ²²⁶Ra, is isolated, preferably for recycling for repeated irradiation,
d) Ac and/or Th is washed out from the separation and the purification column by elution solution containing 5 to 10M mineral acid and optionally at least one complexing agent, preferably the mineral acid is HNO₃ and/or HCl.

2. The method according to claim 1, wherein the at least one complexing agent is present and it is selected from the group containing:
- polyaminocarboxylic acids of general formula (I) 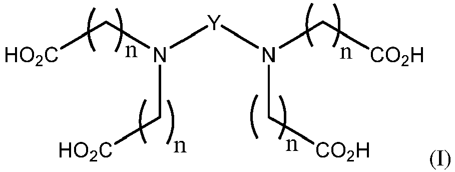 wherein n can be 1-5, Y can be selected from the group containing C1-C10 alkane-1,1-diyl, C2-C10 alkane-1,2-diyl, C3-C10 alkane-1,3-diyl, C2-C10 alkene-1,1-diyl, C2-C10 alkene-1,2-diyl, C3-C10 alkene-1,3-diyl, C2-C10 alkyne-1,1-diyl, C2-C10 alkyne-1,2-diyl, C3-C10 alkyne-1,3-diyl, C3-C10 cycloalk-1,1-diyl, C3-C10 cycloalk-1,2-diyl, C3-C10 cycloalk-1,3-diyl, C6-C10 ar-1,2-diyl, C6-C10 ar-1,3-diyl, C3-C10 heteroar-1,2-diyl containing at least one heteroatom, C3-C10 heteroar-1,3-diyl containing at least one heteroatom, C3-C10 heterocycl-1,2-diyl containing at least one heteroatom, C3-C10 heterocycl-1,3-diyl containing at least one heteroatom, wherein the heteroatoms are selected from the group containing O, S, N, P; and/or salts of polyaminocarboxylic acids with s Na⁺, K⁺, Mn²⁺, Ca²⁺, Zn²⁺, Fe³⁺, Cu²⁺;
- polyphosphonic acids of a general formula (II) 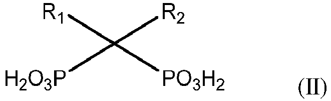 wherein R1, R2 can be the same or different, and are selected from the group containing hydrogen, C1-C10 alkyl, C6-C10 aryl, C1-C10 heteroalkyl containing at least one heteroatom, C3-C10 heteroaryl containing at least one heteroatom, C3-C10 heterocyclyl containing at least one heteroatom, wherein the heteroatoms are selected from the group containing O, S, N, P, hydroxyl, nitrile, amine, halogen (F, Cl, Br, I);
- polyphosphonic acids of general formula (III) 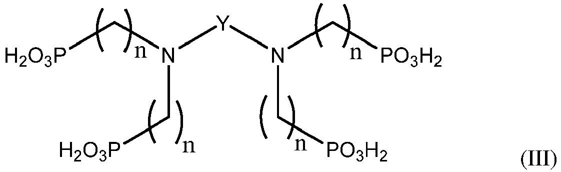 wherein n is 1-5, Y is selected from the group containing C1-C10 alkane-1,1-diyl, C2-C10 alkane-1,2-diyl, C3-C10 alkane-1,3-diyl, C2-C10 alkene-1,1-diyl, C2-C10 alkene-1,2-diyl, C3-C10 alkene-1,3-diyl, C2-C10 alkyne-1,1-diyl, C2-C10 alkyne-1,2-diyl, C3-C10 alkyne-1,3-diyl, C3-C10 cycloalk-1,1-diyl, C3-C10 cycloalk-1,2-diyl, C3-C10 cycloalk-1,3-diyl, C6-C10 ar-1,2-diyl, C6-C10 ar-1,3-diyl, C3-C10 heteroar-1,2-diyl containing at least one heteroatom, C3-C10 heteroar-1,3-diyl containing at least one heteroatom, C3-C10 heterocycl-1,2-diyl containing at least one heteroatom, C3-C10 heterocycl-1,3-diyl containing at least one heteroatom, wherein the heteroatoms are selected from the group containing O, S, N, P;
- esters of phosphonic acid with C1-C10 alkyl, C6-C10 aryl, C1-C10 heteroalkyl containing at least one heteroatom, C3-C10 heteroaryl containing at least one heteroatom, C3-C10 heterocyclyl containing at least one heteroatom, wherein the heteroatoms are selected from the group containing O, S, N, P, hydroxyl, nitrile, amine, halogen (F, Cl, Br, I);
- diglycolamides of general formula (IV) 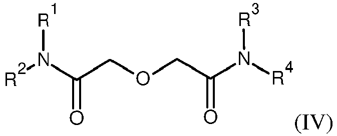 wherein R1, R2, R3 can be the same or different, and are selected from the group containing hydrogen, C1-C10 alkyl, C6-C10 aryl, C3-C10 heteroaryl containing at least one heteroatom, C3-C10 heterocyclyl containing at least one heteroatom, wherein the heteroatoms are selected from the group containing O, S, N, P; R4 represents the residue of the polymeric matrix or has the same meaning as R1 to R3;
- quaternary ammonium salts (V) 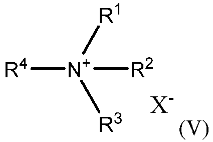 wherein R1, R2, R3, R4 can be the same or different, and are selected from the group containing hydrogen, C1-C10 alkyl, C6-C10 aryl, C3-C10 heteroaryl containing at least one heteroatom, C3-C10 heterocyclyl containing at least one heteroatom, wherein the heteroatoms are selected from the group containing O, S, N, P; X can be Cl⁻ , Br or I⁻ ;
- nitrilotriacetic acid or its derivatives.

3. The method according to claim 1 or 2, wherein when the solution resulting from step d) contains a mixture of Ac and Th, it is loaded onto a column containing polymeric matrix containing the complexing agent, preferably the complexing agent is covalently bound on the polymeric matrix, and the loaded mixture is eluted with 0,1 to 10 M mineral acid, preferably selected from HNO₃ and/or HCl.

4. A method according to claim 3, wherein the separation of the Ac and Th mixture is performed on two consecutive columns, wherein one column contains the polymeric matrix with covalently bound complexing agent and the other column contains an anion exchanger.

## Patentansprüche

1. Verfahren zur Isolierung von Ac aus einer Mischung aus Radium, Actinium und Thorium, umfassend die folgenden Schritte:
a) Ein Gemisch von Ra/Ac/Th wird auf eine Trennsäule geladen, die einen Anionenaustauscher auf der Basis eines mit Divinylbenzol vernetzten Styrols enthält, wobei der Gehalt des Vernetzungsmittels im Bereich von 5 bis 50 % liegt, vorzugsweise 8 bis 16 %, im Nitratzyklus, und eluiert mit einer Lösung, die eine Mischung von 0,6-0,8M wässriger Lösung von Salpetersäure und Methanol im Volumenverhältnis von Salpetersäurelösung : Methanol = 30 : 70 bis 10 : 90 enthält,
b) das Eluat von der Trennsäule wird durch die Reinigungssäule geführt, die einen Anionenaustauscher auf der Basis von mit Divinylbenzol vernetztem Styrol enthält, wobei der Gehalt des Vernetzungsmittels im Bereich von 5 bis 50 % liegt, vorzugsweise 8 bis 16 %, im Nitratzyklus, und eluiert mit einer Lösung, die eine Mischung von 0,6-0,8M wässriger Lösung von Salpetersäure und Methanol im Volumenverhältnis von Salpetersäurelösung : Methanol = 30 : 70 bis 10 : 90 enthält,
c) das Eluat aus Schritt b), das ²²⁶Ra enthält, wird isoliert, vorzugsweise zum Recycling für wiederholte Bestrahlung,
d) Ac und/oder Th werden aus der Trenn- und Reinigungssäule ausgewaschen durch Elutionslösung, die 5 bis 10M Mineralsäure und gegebenenfalls mindestens ein Komplexbildner enthält, vorzugsweise ist die Mineralsäure HNO₃ und/oder HCl.

2. Verfahren nach Anspruch 1, wobei das mindestens ein Komplexbildner vorhanden ist und es ausgewählt ist aus der Gruppe, die enthält:
- Polyaminocarbonsäuren der allgemeinen Formel (I) 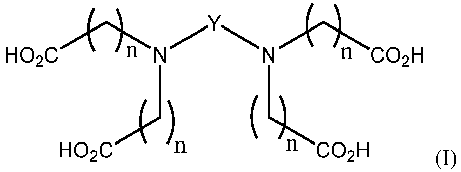 worin n 1 bis 5 ist, Y ausgewählt ist aus der Gruppe, die enthält: C1-C10-Alkan-1,1-diyl, C2-C10-Alkan-1,2-diyl, C3-C10-Alkan-1,3-diyl, C2-C10-Alken-1,1-diyl, C2-C10-Alken-1,2-diyl, C3-C10-Alken-1,3-diyl, C2-C10-Alkin-1,1-diyl, C2-C10-Alkin-1,2-Diyl, C3-C10-Alkin-1,3-diyl, C3-C10-Cycloalk-1,1-diyl, C3-C10-Cycloalk-1,2-diyl, C3-C10-Cycloalk-1,3-diyl, C6-C10-Ar-1,2-diyl, C6-C10-Ar-1,3-diyl, C3-C10-Heteroar-1,2-diyl mit mindestens einem Heteroatom, C3-C10-Heteroar-1,3-diyl mit mindestens einem Heteroatom, C3-C10-Heterocycl-1,2-diyl mit mindestens einem Heteroatom, C3-C10-Heterocycl-1,3-diyl mit mindestens einem Heteroatom, wobei die Heteroatome ausgewählt sind aus der Gruppe, die O, S, N, P enthält; und/oder Salze von Polyaminocarbonsäuren mit s Na⁺, K⁺, Mn²⁺, Ca²⁺, Zn²⁺, Fe³⁺, Cu²⁺;
- Polyphosphonsäuren der allgemeinen Formel (II) 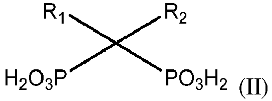 worin R1, R2 gleich oder verschieden sein können und ausgewählt sind aus der Gruppe, die enthält: Wasserstoff, C1-C10-Alkyl, C6-C10-Aryl, C1-C10-Heteroalkyl mit mindestens einem Heteroatom, C3-C10-Heteroaryl mit mindestens einem Heteroatom, C3-C10-Heterocyclyl mit mindestens einem Heteroatom, wobei die Heteroatome ausgewählt sind aus der Gruppe, die O, S, N, P enthält, Hydroxyl, Nitril, Amin, Halogen (F, Cl, Br, I);
- Polyphosphonsäuren der allgemeinen Formel (III) 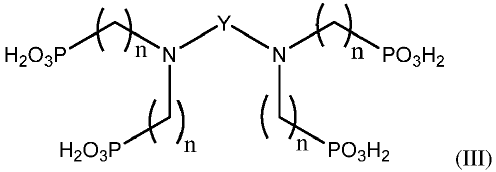 worin n 1-5 ist, Y ausgewählt ist aus der Gruppe, die enthält: C1-C10-Alkan-1,1-diyl, C2-C10-Alkan-1,2-diyl, C3-C10-Alkan-1,3-diyl, C2-C10-Alken-1,1-diyl, C2-C10-Alken-1,2-diyl, C3-C10-Alken-1,3-diyl, C2-C10-Alkin-1,1-diyl, C2-C10-Alkin-1,2-Diyl, C3-C10-Alkin-1,3-diyl, C3-C10-Cycloalk-1,1-diyl, C3-C10-Cycloalk-1,2-diyl, C3-C10-Cycloalk-1,3-diyl, C6-C10-Ar-1,2-diyl, C6-C10-Ar-1,3-diyl, C3-C10-Heteroar-1,2-diyl mit mindestens einem Heteroatom, C3-C10-Heteroar-1,3-diyl mit mindestens einem Heteroatom, C3-C10-Heterocycl-1,2-diyl mit mindestens einem Heteroatom, C3-C10-Heterocycl-1,3-diyl mit mindestens einem Heteroatom, wobei die Heteroatome ausgewählt sind aus der Gruppe, die O, S, N, P enthält;
- Phosphonsäureester mit C1-C10-Alkyl, C6-C10-Aryl, C1-C10-Heteroalkyl mit mindestens einem Heteroatom, C3-C10-Heteroaryl mit mindestens einem Heteroatom, C3-C10-Heterocyclyl mit mindestens einem Heteroatom, wobei die Heteroatome sind ausgewählt aus der Gruppe, die O, S, N, P enthält, Hydroxyl, Nitril, Amin, Halogen (F, Cl, Br, I);
- Diglycolamide der allgemeinen Formel (IV) 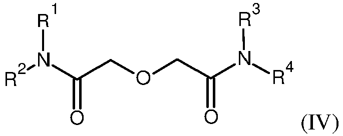 worin R1, R2, R3 gleich oder verschieden sein können und ausgewählt sind aus der Gruppe, die enthält: Wasserstoff, C1-C10-Alkyl, C6-C10-Aryl, C3-C10-Heteroaryl mit mindestens einem Heteroatom, C3-C10-Heterocyclyl mit mindestens einem Heteroatom, wobei die Heteroatome ausgewählt sind aus der Gruppe, die O, S, N, P enthält; R4 den Rest der Polymermatrix darstellt oder die gleiche Bedeutung wie R1 bis R3 hat;
- quaternäre Ammoniumsalze (V) 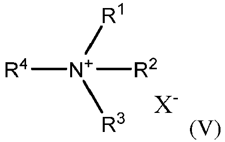 worin R1, R2, R3, R4 gleich oder verschieden sein können und ausgewählt sind aus der Gruppe, die enthält: Wasserstoff, C1-C10-Alkyl, C6-C10-Aryl, C3-C10-Heteroaryl mit mindestens einem Heteroatom, C3-C10-Heterocyclyl mit mindestens einem Heteroatom, wobei die Heteroatome ausgewählt sind aus der Gruppe, die O, S, N, P enthält; X kann Cl⁻, Br⁻ oder I⁻ sein;
- Nitrilotriessigsäure oder deren Derivate.

3. Verfahren nach Anspruch 1 oder 2, wobei, wenn die aus Schritt d) resultierende Lösung ein Gemisch von Ac und Th enthält, sie auf eine Säule geladen wird, die eine ein Komplexbildner enthältend Polymermatrix enthält, vorzugsweise das Komplexbildner kovalent gebunden ist an die Polymermatrix; und die beladene Mischung wird mit 0,1 bis 10M Mineralsäure eluiert, vorzugsweise ausgewählt aus HNO₃ und/oder HCl.

4. Verfahren nach Anspruch 3, wobei die Trennung des Ac- und Th-Gemisches an zwei aufeinanderfolgenden Säulen durchgeführt wird, wobei eine Säule die Polymermatrix mit kovalent gebundenem Komplexbildner enthält und die andere Säule einen Anionenaustauscher enthält.

## Revendications

1. Procédé d'isolement de Ac à partir d'un mélange comprenant du radium, de l'actinium et du thorium, ledit procédé comprenant les étapes suivantes:
a) un mélange de Ra/Ac/Th est chargé sur une colonne de séparation contenant un échangeur d'anions à base d'un styrène réticulé avec du divinylbenzène, dans laquelle la teneur en agent de réticulation est de l'ordre de 5 à 50 %, de préférence 8 à 16 %, en cycle nitrate, et éluée avec une solution contenant un mélange de 0,6-0,8M de solution aqueuse d'acide nitrique et de méthanol en rapport volumique de solution d'acide nitrique : méthanol = 30 : 70 à 10 : 90,
b) l'éluat de la colonne de séparation est conduit à travers la colonne de purification contenant un échangeur d'anions à base de styrène réticulé avec du divinylbenzène, dans lequel la teneur en agent de réticulation est comprise entre 5 et 50 %, de préférence 8 à 16 %, en cycle de nitrate, et éluée avec une solution contenant un mélange de 0,6-0,8M de solution aqueuse d'acide nitrique et de méthanol en rapport volumique de solution d'acide nitrique : méthanol = 30 : 70 à 10 : 90,
c) l'éluat de l'étape b), contenant ²²⁶Ra, est isolé, de préférence pour recyclage pour irradiation répétée,
d) Ac et/ou Th sont éliminés par lavage de la colonne de séparation et de purification par une solution d'élution contenant 5 à 10M acide minéral et éventuellement au moins un agent complexant, de préférence l'acide minéral est HNO₃ et/ou HCl.

2. Procédé selon la revendication 1, où le au moins un agent complexant est présent et il est choisi dans le groupe contenant:
- acides polyaminocarboxyliques de formule générale (I) 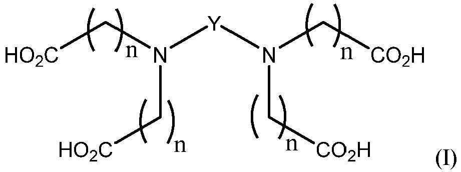 où n est 1 à 5, Y est choisi dans le groupe contenant alcane-1,1-diyle en C1-C10, alcane-1,2-diyle en C2-C10, alcane-1,3-diyle en C3-C10, alcène-1,1-diyle en C2-C10, alcène-1,2-diyle en C2-C10, alcène-1,3-diyle en C3-C10, alcyne-1,1-diyle en C2-C10, alcyne-1,2-diyle en C2-C10, alcyne-1,3-diyle en C3-C10, cycloalk-1,1-diyle en C3-C10, cycloalk-1,2-diyle en C3-C10, cycloalk-1,3-diyle en C3-C10, ar-1,2-diyle en C6-C10, ar-1,3-diyle en C6-C10, hétéroar-1,2-diyle en C3-C10 contenant au moins un hétéroatome, hétéroar-1,3-diyle en C3-C10 contenant au moins un hétéroatome, hétérocycl-1,2-diyle en C3-C10 contenant au moins un hétéroatome, hétérocycl-1,3-diyle en C3-C10 contenant au moins un hétéroatome, les hétéroatomes étant choisis dans le groupe contenant O, S, N, P; et/ou des sels d'acides polyaminocarboxyliques avec s Na⁺, K⁺, Mn²⁺, Ca²⁺, Zn²⁺, Fe³⁺, Cu²⁺;
- acides polyphosphoniques de formule générale (II) 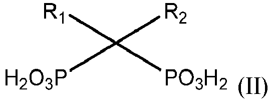 où R1, R2 peuvent être identiques ou différents, et sont choisis dans le groupe contenant l'hydrogène, alkyle en C1-C10, aryle en C6-C10, hétéroalkyle en C1-C10 contenant au moins un hétéroatome, hétéroaryle en C3-C10 contenant au moins un hétéroatome, hétérocyclyle en C3-C10 contenant au moins un hétéroatome, les hétéroatomes étant choisis dans le groupe contenant O, S, N, P, hydroxyle, nitrile, amine, halogène (F, Cl, Br, I);
- acides polyphosphoniques de formule générale (III) 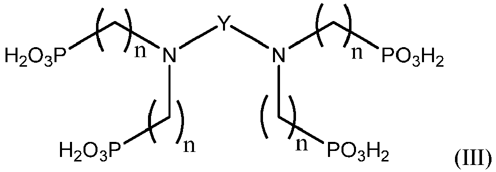 où n est 1 à 5, Y est choisi dans le groupe contenant alcane-1,1-diyle en C1-C10, alcane-1,2-diyle en C2-C10, alcane-1,3-diyle en C3-C10, alcène-1,1-diyle en C2-C10, alcène-1,2-diyle en C2-C10, alcène-1,3-diyle en C3-C10, alcyne-1,1-diyle en C2-C10, alcyne-1,2-diyle en C2-C10, alcyne-1,3-diyle en C3-C10, cycloalk-1,1-diyle en C3-C10, cycloalk-1,2-diyle en C3-C10, cycloalk-1,3-diyle en C3-C10, ar-1,2-diyle en C6-C10, ar-1,3-diyle en C6-C10, hétéroar-1,2-diyle en C3-C10 contenant au moins un hétéroatome, hétéroar-1,3-diyle en C3-C10 contenant au moins un hétéroatome, hétérocycl-1,2-diyle en C3-C10 contenant au moins un hétéroatome, hétérocycl-1,3-diyle en C3-C10 contenant au moins un hétéroatome, les hétéroatomes étant choisis dans le groupe contenant O, S, N, P;
- les esters d'acide phosphonique avec alkyle en C1-C10, aryle en C6-C10, hétéroalkyle en C1-C10 contenant au moins un hétéroatome, hétéroaryle en C3-C10 contenant au moins un hétéroatome, hétérocyclyle en C3-C10 contenant au moins un hétéroatome, les hétéroatomes étant choisi dans le groupe contenant O, S, N, P, hydroxyle, nitrile, amine, halogène (F, Cl, Br, I);
- diglycolamides de formule générale (IV) 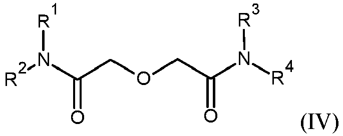 où R1, R2, R3 peuvent être identiques ou différents, et sont choisis dans le groupe contenant un hydrogène, alkyle en C1-C10, aryle en C6-C10, hétéroaryle en C3-C10 contenant au moins un hétéroatome, un hétérocyclyle en C3-C10 contenant au moins un hétéroatome, les hétéroatomes étant choisis dans le groupe contenant O, S, N, P; R4 représente le résidu de la matrice polymère ou a la même signification que R1 à R3;
- sels d'ammonium quaternaire (V) 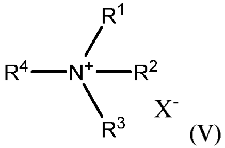 où R1, R2, R3, R4 peuvent être identiques ou différents et sont choisis dans le groupe contenant l'hydrogène, alkyle en C1-C10, aryle en C6-C10, hétéroaryle en C3-C10 contenant au moins un hétéroatome, hétérocyclyle en C3-C10 contenant au moins un hétéroatome, les hétéroatomes étant choisis dans le groupe contenant O, S, N, P; X est Cl⁻, Br⁻ ou I⁻;
- acide nitrilotriacétique ou ses dérivés.

3. Procédé selon la revendication 1 ou 2, où lorsque la solution issue de l'étape d) contient un mélange de Ac et Th, elle est chargée sur une colonne contenant la matrice polymérique contenant l'agent complexant, de préférence l'agent complexant est lié de manière covalente sur la matrice polymérique et le mélange chargé sont élués avec 0,1 à 10 M d'acide minéral, de préférence choisi parmi HNO₃ et/ou HCl.

4. Procédé selon la revendication 3, où la séparation du mélange Ac et Th est effectuée sur deux colonnes consécutives, dans laquelle une colonne contient la matrice polymérique avec un agent complexant lié de manière covalente et l'autre colonne contient un échangeur d'anions.
